# EUROPEAN PATENT APPLICATION

(11) **EP 4 435 129 A1**
(43) Date of publication of application: **25.09.2024**
(21) Application number: 22894421.1
(22) Date of filing: 16.09.2022
(51) Int. Cl.: C22C 38/02, C22C 38/04, C22C 38/06, C22C 38/44, C22C 38/46, C22C 38/48, C22C 38/50, C22C 38/54, C21C 7/00, C21D 8/02, C22C 33/06

(54) **WIDE AND HEAVY STEEL PLATE HAVING ULTRAHIGH STRENGTH AND CONTAINING RARE EARTH AND PREPARATION METHOD THEREFOR**

(30) Priority: 19.11.2021 CN 202111381840
(71) Applicant: Nanjing Iron & Steel Co., Ltd., Nanjing, Jiangsu 210035 (CN)
(72) Inventor: YAN, Qiangjun, Nanjing, Jiangsu 210035 (CN); LIU, Chengjun, Nanjing, Jiangsu 210035 (CN); ZHANG, Bo, Nanjing, Jiangsu 210035 (CN); JIN, Jianfeng, Nanjing, Jiangsu 210035 (CN); GE, Xin, Nanjing, Jiangsu 210035 (CN); HUANG, Biaokai, Nanjing, Jiangsu 210035 (CN); LI, Qingchun, Nanjing, Jiangsu 210035 (CN); LEI, Xiaorong, Nanjing, Jiangsu 210035 (CN)
(74) Representative: Proi World Intellectual Property GmbH
(86) International application number: PCT/CN2022/119352
(87) International publication number: WO 2023/087883

(57) **Abstract**

A wide and heavy steel plate having ultrahigh strength and containing rare earth and a preparation method therefor relate to the technical field of steel production. The steel plate comprises the following chemical components in percentages by mass: C: 0.10%-0.18%, Mn: 0.55%-1.35%, Si: 0.15%-0.35%, Cr: 0.20%-0.70%, Mo: 0.25%-0.65%, Ni: 0.85%-1.25%, Nb: 0.016%-0.044%, V: 0.025%-0.065%, Ti ≤ 0.010%, Al: 0.025%-0.070%, B: 0.001%-0.003%, P ≤ 0.015%, S ≤ 0.002%, T.O ≤ 0.0010%, N ≤ 0.0055%, Ceq ≤ 0.0050 ppm, and the rest is iron and inevitable impurities. The steel plate has a tensile strength of 1400-1470 MPa, a yield strength of 1200-1300 MPa, an elongation of 10.0%-12.5%, a low temperature impact toughness at -40°C of 90-150 J, and a flatness of 3 mm/m and 5 mm/2m.

## Description

### TECHNICAL FIELD

The present invention relates to the technical field of steel production, in particular to a rare earth-containing ultra-high-strength wide-thickness steel plate and a preparation method thereof.

### BACKGROUND

Low-alloy wide and thick steel plates with high strength are widely applied to manufacturing industries such as buildings and bridges, engineering and mining machinery, vehicle structures, containers and the like. The demand for wide and thick steel plates with ultra-high yield strength is increasingly strong along with the daily life and high efficiency of engineering machinery. At the same time, the service condition of the engineering machinery is also increasingly rigorous, and therefore the toughness and plasticity of the steel plate have also proposed higher requirements. In particular, for a wide and thick plate with a thickness of ≥ 25 mm, a uniform martensitic structure is obtained on the entire thickness section of the steel plate, and it is usually necessary to add a plurality of alloy elements to the steel, which not only increases the alloying cost, but also adversely affects the toughness and plasticity and weldability of the steel plate.

Patent CN103614626 discloses a rare earth treated steel plate for high-strength engineering machinery, the yield strength of which reaches 500 MPa, and the low-temperature impact energy of - 20°C is greater than 200 J. The patent only provides the components and the rolling and heat treatment system of the steel plate, and does not indicate the smelting method. The patent CN109234633 discloses a low-preheating temperature 690 MPa-grade high-strength steel plate for rare earth treatment and a preparation method thereof. The welding preheating temperature of a 690 MPa-grade high-strength steel plate is reduced through rare earth treatment, and the patent also provides the components and the rolling and heat treatment system of the steel plate, which simply lists the smelting process and is not applicable. Patent CN103834870 discloses a rare earth-containing steel plate and a production process thereof. The yield strength of the steel plate reaches a level of 700 MPa. The patent also provides the components and the rolling and heat treatment system of the steel plate, and lists the smelting process, wherein the addition of the rare earth in the continuous casting process does not facilitate the floating removal of the rare earth inclusions and the uniform distribution of the rare earth elements in the steel grade, which seriously affects the quality of the steel. The patent CN111519096 discloses a rare earth-containing Q890 CF high-strength steel plate and a manufacturing method thereof, wherein the yield strength of the steel plate reaches 890 MPa, and the patent uses high-quality scrap steel as a raw material to smelt and cast a steel ingot by using a vacuum smelting furnace, and the method is not suitable for large-scale production. In the above patents, rare earth alloys are added to high-strength steel to improve mechanical properties, but the yield strength levels of the steel plates are all below 1000 Å. Patent CN102888558 discloses a high-strength steel plate containing rare earth La and a heat treatment process thereof. The yield strength of the steel plate reaches 1100-1300° C. and the elongation reaches 7-15%. However, the patent does not disclose the smelting process and the low-temperature impact toughness of the steel plate, and the thickness of the steel plate is only 5-25 mm. With the continuous increase of the requirements of engineering machinery on steel plate strength and toughness, how to improve the toughness and plasticity of wide and thick steel plates with a thickness of 25 mm or more while improving strength becomes a technical bottleneck for developing ultra-high strength wide and thick steel plates.

### SUMMARY OF THE INVENTION

In view of the above technical problems, the present invention overcomes the shortcomings of the prior art and provides a rare earth-containing ultra-high-strength wide-thickness steel plate with a chemical composition and mass percentage as follows: 0.10% - 0.18% of C, 0.55% -1.35% of Mn, 0.15% -0.35% of Si, 0.20% -0.70% of Cr, 0.25% -0.65% of Mo, 0.85% -1.25% of Ni, 0.016% -0.044% of Nb, 0.025% -0.065% of V, less than or equal to 0.010% of Ti, 0.025% -0.070% of Al, 0.001% -0.003% of B, less than or equal to 0.015% of P, less than or equal to 0.002% of S, and less than or equal to 0 0010%, N ≤ 0.0055%, Ceq ≤ 0.0050 ppm, and the rest is iron and inevitable impurities.

The technical solution further defined in the present invention is as follows:

The rare earth-containing ultra-high strength wide and thick steel plate has a chemical composition and mass percentage as follows: C: 0.14% -0.16%, Mn: 1.35% -1.55%, Si: 0.15% -0.35%, Cr: 0.50% -0.70%, Mo: 0.45% -0.65%, Ni: 0.85% -1.25%, Nb: 0.016%-0.044%, V: 0.025% -0.065%, Ti ≤ 0.010%, Al: 0.055% -0.070%, B: 0.001% -0.003%, P ≤ 0.015%, S ≤ 0.002%, T.O ≤ 0.0010%, N ≤ 0.0055%, and Ceq ≤ 0 0050 ppm, the rest being iron and unavoidable impurities.

The rare earth-containing ultra-high strength wide and thick steel plate has a chemical composition and mass percentage as follows: C: 0.15% -0.17%, Mn: 1.05% -1.35%, Si: 0.15% -0.35%, Cr: 0.30% -0.40%, Mo: 0.25% -0.45%, Ni: 0.45% -0.75%, Nb: 0.016%-0.044%, V: 0.025% -0.065%, Ti ≤ 0.010%, Al: 0.025% -0.070%, B: 0.001% -0.003%, P ≤ 0.015%, S ≤ 0.002%, T.O ≤ 0.0010%, N ≤ 0.0055%, and Ceq ≤ 0 0050 ppm, the rest being iron and unavoidable impurities.

Another object of the present invention is to provide a preparation method of a rare earth-containing ultra-high-strength wide-thickness steel plate, which comprises the steps of molten iron pretreatment, converter blowing, LF refining, RH refining, continuous casting, controlled rolling and controlled cooling, and heat treatment,
The molten iron pretreatment requires less than or equal to 0.0030% of S in the molten iron after slagging off;
Converter blowing requires aluminum deoxidation after tapping, and the total oxygen in the molten steel is less than or equal to 0.0600%;
LF refining requires less than or equal to 0.0020% of total oxygen in molten steel after deoxidation;
RH refining requires vacuum treatment for 10-20 minutes, a rare earth iron alloy is added through a stock bin, or after vacuum treatment is finished, the slag layer is blown into a rare earth wire by bottom blowing argon; after RH is finished, after boron iron is added or boron wire is fed, the static stirring time is greater than or equal to 15 minutes;
The continuous casting long nozzle and the submersed nozzle perform strict argon seal, and the temperature of the tundish molten steel is controlled at 1510-1560° C.

heating the casting blank to 1200-1240°C in a controlled rolling and controlled cooling requirement, performing two-stage controlled rolling, rolling in the first stage until the temperature is less than or equal to 900°C for second-stage rolling, and performing air cooling after rolling; the two-stage cumulative reduction rate being greater than or equal to 60% and ≥ 70%, respectively;

The heat treatment includes quenching and tempering, the quenching heating temperature is 860-950° C. and the tempering heating temperature is 150-220° C.

The method for preparing the rare earth-containing ultra-high strength wide and thick steel plate comprises the following steps: the width of the steel plate is greater than or equal to 2000 mm, and the thickness is 25-40 mm.

The method for preparing the rare earth-containing ultra-high-strength wide-thickness steel plate, the metallographic structure of the steel plate being tempered martensite.

The beneficial effects of the present invention are as follows:
(1) According to the present invention, the rare earth alloy metamorphic steel is added to clamp sundries, and grain refinement and tissue homogenization are realized, so that the toughness and plasticity of the ultrahigh-strength wide-thickness plate with the yield strength of 1200 MPa or above are effectively improved;
(2) adding Ce elements with rich reserves in China in the molten steel refining process, modifying the Al₂O₃ inclusions, which are easy to aggregate and grow, in the molten steel to CeAlO₃, Ce₂ O₂ S, CES, and other rare-earth inclusions, such as CeAlO₃, Ce₂ O₂ S, CES, and the like, which are close to each other and are not easy to polymerize and grow; meanwhile, the rare earth is dissolved in the MnS inclusions and becomes spindle-shaped from strip-shaped, which can greatly reduce the harm to the performance of the steel plate for the modification effect of the inclusions;
(3) The solid solution rare earth in the steel of the present invention can effectively purify the grain boundary, the polarization of the rare earth at the grain boundary can also play a role in strengthening the grain boundary, the growth of the crystal is hindered, and segregation is reduced;
(4) In the present invention, under the action of modification inclusions and microalloying of the rare earth elements, the refining of the steel plate grains and the homogenization of the tissues can be realized in cooperation with a scientific and reasonable rolling and heat treatment system, and the anisotropy is reduced, so that the purpose of improving the toughness and plasticity is achieved;
(5) The tensile strength of the steel plate of the present invention is 1400-1470° C, the yield strength is 1200-1300° C, the elongation is 10.0% -12.5%, the low-temperature impact toughness at - 40°C is 90-150 J, the flatness is 3 mm/m, and 5 mm/2m.

### DETAILED DESCRIPTION OF THE EMBODIMENTS

### Example 1

The rare earth-containing ultra-high strength wide and thick steel plate provided by the present embodiment has a width of 2200 mm, a thickness of 25 mm, a flatness of 3 mm/m, and a chemical composition and mass percentage thereof 0.10% of C, 1.24% of Mn, 0.28% of Si, 0.44% of Cr, 0.37% of Mo, 0.95% of Ni, 0.028% of Nb, 0.065% of V, 0.048% of Al, 0.008% of P, 0.0018% of S, 0.0043% of N, 0.0007 ppm of Ceq, and the rest is iron and inevitable impurities.

The preparation method comprises the following steps: molten iron pretreatment, converter blowing, LF refining, RH refining, continuous casting, controlled rolling and controlled cooling, and heat treatment. The mass fraction of S in the molten iron after pretreatment and slagging-off of the molten iron is 0.0028%. After the converter blows out steel, aluminum is added for deoxidation, and the mass fraction of the total oxygen in the molten steel is 0.0550%. The mass fraction of total oxygen in the molten steel after LF refining and deoxidation is 0.0017%. The Rh refining vacuum treatment was performed for 10 min and the rare earth iron alloy was added through the stock bin. After the end of Rh, ferroboron is added, and the long nozzle and the immersion nozzle are continuously cast for 18 min to perform strict argon seal, and the temperature of the tundish molten steel is controlled at 1525° C. The casting blank is heated to 1220°C by controlled rolling and controlled cooling, two-stage controlled rolling is adopted, after the first stage of rolling, the casting blank is rolled at 840°C for the second stage, and air cooling is performed after rolling. The two-stage cumulative reduction rates were 65% and 72%, respectively. The heat treatment includes quenching and tempering, the quenching heating temperature is 860° C. and the tempering heating temperature is 150° C.

The mechanical properties of the steel sheet are shown in Table 1, and compared with Comparative Example 1 without rare earth obtained by using the same preparation method, the tensile strength and yield strength of Example 1 are basically equivalent, and the elongation after fracture and the low-temperature impact toughness at - 40°C are significantly improved.

### Example 2

The rare earth-containing ultra-high strength wide and thick steel plate provided by the present embodiment has a width of 2000 mm, a thickness of 30 mm, a flatness of 3 mm/m, and a chemical composition of 5 mm/2 m in percentage by mass: 0.10% of C, 1.14% of Mn, 0.35% of Si, 0.33% of Cr, 0.25% of Mo, 0.85% of Ni, 0.030% of Nb, 0.055% of V, 0.056% of Al, 0.011% of P, 0.0012% of S, 0.0053% of N, 0.0026 ppm of Ceq, and the rest is iron and inevitable impurities.

The preparation method comprises the following steps: molten iron pretreatment, converter blowing, LF refining, RH refining, continuous casting, controlled rolling and controlled cooling, and heat treatment. After the molten iron is pretreated, the mass fraction of S in the molten iron is 0.0020%. After the converter blows out steel, aluminum is added for deoxidation, and the mass fraction of the total oxygen in the molten steel is 0.0480%. The mass fraction of total oxygen in the molten steel after LF refining and deoxidation is 0.0016%. The Rh refining vacuum treatment was performed for 20 min and the rare earth iron alloy was added through the stock bin. After the end of Rh, the boron wire is fed, the long nozzle and the submersed nozzle are continuously stirred for 15 min to carry out strict argon seal, and the temperature of the tundish molten steel is controlled at 1510° C. The casting blank is heated to 1240°C through controlled rolling and controlled cooling, two-stage controlled rolling is adopted, after the first stage of rolling, the casting blank is rolled at the temperature of 900°C for the second stage, and air cooling is performed after rolling. The two-stage cumulative reduction rates were 65% and 70%, respectively. The heat treatment includes quenching and tempering, the quenching heating temperature is 940° C, and the tempering heating temperature is 210° C.

The mechanical properties of the steel sheet are shown in Table 1, and compared with Comparative Example 2 without rare earth obtained by using the same preparation method, the tensile strength and yield strength of Example 2 are basically equivalent, and the elongation after fracture and the low-temperature impact toughness at - 40°C are significantly improved.

### Example 3

The rare earth-containing ultra-high strength wide and thick steel plate provided by the present embodiment has a width of 3200 mm, a thickness of 40 mm, a flatness of 3 mm/m, and a chemical composition of 5 mm/2 m in percentage by mass: 0.18% of C, 0.56% of Mn, 0.15% of Si, 0.64% of Cr, 0.61% of Mo, 1.25% of Ni, 0.042% of Nb, 0.038% of V, 0.035% of Al, 0.005% of P, 0.0016% of S, 0.0046% of N, 0.0050 ppm of Ceq, and the rest is iron and inevitable impurities.

The preparation method comprises the following steps: molten iron pretreatment, converter blowing, LF refining, RH refining, continuous casting, controlled rolling and controlled cooling, and heat treatment. After the molten iron is pretreated, the mass fraction of S in the molten iron is 0.0030%. After the converter blows out steel, aluminum is added for deoxidation, and the mass fraction of the total oxygen in the molten steel is 0.0500%. The mass fraction of total oxygen in the molten steel after LF refining and deoxidation is 0.0020%. After the RH refining vacuum treatment is finished, the slag layer is blown by bottom blowing argon and then fed into the rare earth wire, then ferroboron is added, the long nozzle and the submersed nozzle are continuously stirred for 20 minutes to carry out strict argon seal, and the temperature of the tundish molten steel is controlled at 1560° C. The casting blank is heated to 1200°C through controlled rolling and controlled cooling, two-stage controlled rolling is adopted, after the first stage of rolling, the casting blank is rolled at 880°C for the second stage, and air cooling is performed after rolling. The two-stage cumulative reduction rates were 60% and 74%, respectively. The heat treatment includes quenching and tempering; the quenching heating temperature is 950° C and the tempering heating temperature is 220° C.

The mechanical properties of the steel sheet are shown in Table 1, and compared with Comparative Example 3 without rare earth obtained by using the same preparation method, the tensile strength and yield strength of Example 3 are basically equivalent, and the elongation after fracture and the low-temperature impact toughness at - 40°C are significantly improved.

**TABLE 1. Mechanical Properties of the Steel Plate**

| Embodiments | Width (mm) | Thickness (mm) | Tensile Strength (Mpa) | Yield Strength (Mpa) | Elongation at break (%) | 40°CImpact Work (J) |
|---|---|---|---|---|---|---|
| Embodiment 1 | 2200 | 25 | 1467 | 1240 | 12.0 | 92 |
| Comparative Example 1 | 2200 | 25 | 1422 | 1202 | 10.0 | 67 |
| Embodiment 2 | 2000 | 30 | 1427 | 1262 | 10.5 | 133 |
| Comparative Example 2 | 2000 | 30 | 1403 | 1180 | 9.0 | 95 |
| Embodiment 3 | 3200 | 40 | 1408 | 1211 | 10.0 | 147 |
| Comparative Example 3 | 3200 | 40 | 1386 | 1175 | 9.0 | 98 |

In addition to the above embodiments, there may be other embodiments of the present invention. All technical solutions formed by equivalent replacement or equivalent transformation fall within the protection scope of the present disclosure.

## Claims

1. A rare earth-containing ultra-high-strength wide-thickness steel plate, **characterized in that**: the chemical components and mass percentages thereof are as follows: C: 0.10%-0.18%, Mn: 0.55% -1.35%, Si: 0.15% -0.35%, Cr: 0.20% -0.70%, Mo: 0.25% -0.65%, Ni: 0.85% -1.25%, Nb: 0.016% -0.044%, V: 0.025% -0.065%, Ti ≤ 0.010%, Al: 0.025%-0.070%, B: 0.001% -0.003%, P ≤ 0.015%, S ≤ 0.002%, T.O ≤ 0.0010%, N ≤ 0.0055%, and Ceq ≤ 0 0050 ppm, the rest being iron and unavoidable impurities.

2. The rare earth-containing ultra-high-strength wide-thickness steel plate according to claim 1, wherein the chemical components and mass percentages thereof are as follows: C: 0.14% -0.16%, Mn: 1.35% -1.55%, Si: 0.15% -0.35%, Cr: 0.50% -0.70%, Mo: 0.45%-0.65%, Ni: 0.85% -1.25%, Nb: 0.016% -0.044%, V: 0.025% -0.065%, Ti ≤ 0.010%, Al: 0.055% -0.070%, B: 0.001% -0.003%, P ≤ 0.015%, S ≤ 0.002%, T.O ≤ 0.0010%, and N ≤ 0 0055%, Ceq ≤ 0.0050 ppm, the rest being iron and inevitable impurities.

3. The rare earth-containing ultra-high-strength wide-thickness steel plate according to claim 1, wherein the chemical components and mass percentages thereof are as follows: C: 0.15% -0.17%, Mn: 1.05% -1.35%, Si: 0.15% -0.35%, Cr: 0.30% -0.40%, Mo: 0.25%-0.45%, Ni: 0.45% -0.75%, Nb: 0.016% -0.044%, V: 0.025% -0.065%, Ti ≤ 0.010%, Al: 0.025% -0.070%, B: 0.001% -0.003%, P ≤ 0.015%, S ≤ 0.002%, T.O ≤ 0.0010%, and N ≤ 0 0055%, Ceq ≤ 0.0050 ppm, the rest being iron and inevitable impurities.

4. A preparation method of the rare earth-containing ultra-high-strength wide-thickness steel plate according to any one of claims 1-3, the method comprising the steps of molten iron pretreatment, converter blowing, LF refining, RH refining, continuous casting, controlled rolling and controlled cooling, and heat treatment;
wherein the step of molten iron pretreatment requires S to be less than or equal to 0.0030% in molten iron after slag removal;
wherein aluminum deoxidation is added after converter blowing, and the total oxygen in the molten steel is less than or equal to 0.0600%; and
wherein the mass fraction of the total oxygen in the molten steel after LF refining is less than or equal to 0.0020%;
wherein the step of RH refining requires vacuum treatment for 10-20 minutes, the rare earth iron alloy is added through the stock bin, or after the vacuum treatment is finished, the slag layer is blown by bottom blowing argon and then fed into the rare earth wire;
wherein after the step of RH refining ends, after boron iron or boron wires are added, the static stirring time is greater than or equal to 15 minutes;
wherein the step of continuous casting casts long water outlet and immersion water outlet to implement argon sealing, the temperature of the intermediate tundish molten steel controlled to be 1510-1560° C;
wherein the step of controlled rolling and controlled cooling requires heating the casting blank to 1200-1240° C, with two-stage controlled rolling used: after the first stage of rolling, the casting blank is rolled at a temperature to ≤ 900°C for a second stage of rolling, and air cooling is performed after rolling; the accumulated reduction rates in the two stages are respectively ≥ 60% and ≥ 70%;
wherein the step of heat treatment comprises quenching and tempering, the quenching heating temperature being 860-950° C, the tempering heating temperature being 150-220° C.

5. The preparation method of the rare earth-containing ultra-high-strength wide-thickness steel plate according to claim 4, wherein the width of the steel plate is greater than or equal to 2000 mm, and the thickness is 25-40 mm.

6. The preparation method of the rare earth-containing ultra-high-strength wide-thickness steel plate according to claim 4, wherein the metallographic structure of the steel plate is tempered martensite.
